**Europäisches Patentamt**

**European Patent Office**

**Office européen des brevets**

(19)

(11) Veröffentlichungsnummer: **0 092 214**

**B1**

(12) # EUROPÄISCHE PATENTSCHRIFT

(45) Veröffentlichungstag der Patentschrift:
**12.07.89**

(21) Anmeldenummer: **83103731.2**

(22) Anmeldetag: **18.04.83**

(51) Int. Cl.⁴: **H 04 L 11/00**

(54) **Schaltungsanordnung zum Quittieren von Anrufsignalen durch Abgabe von Anrufbestätigungssignalen in einer Vermittlungsanlage, insbesondere Daten- und Fernschreibvermittlungsanlage.**

(30) Priorität: **20.04.82 DE 3214557**

(43) Veröffentlichungstag der Anmeldung:
**26.10.83 Patentblatt 83/43**

(45) Bekanntmachung des Hinweises auf die Patenterteilung:
**12.07.89 Patentblatt 89/28**

(84) Benannte Vertragsstaaten:
**AT BE CH GB IT LI SE**

(56) Entgegenhaltungen:
**DE-A-2 833 048**

**COMMUTATION ET ELECTRONIQUE, Nr. 55,
November 1976, Seiten 33-40, Issy-Les-Moulineaux,
FR; A. DUPONT et al.: "L'interconnexion
automatique entre le réseau télex et un réseau
télégraphique privé"**
(73) Patentinhaber: **Siemens Aktiengesellschaft Berlin
und München, Wittelsbacherplatz 2, D-8000
München 2 (DE)**

(72) Erfinder: **Glöde, Guntram, Dipl.- Ing., Büchlweg 17,
D-8024 Oberhaching (DE)**
Erfinder: **Wilde, Kurt, Ing. grad., BUnsenstrasse
20, D-8000 München 83 (DE)**

## Beschreibung

Die Erfindung bezieht sich auf eine Schaltungsanordnung zum Quittieren von über Datensignale in ankommender Übertragungsrichtung zuführenden Anschlußleitungen eintreffenden Anrufsignalen durch Abgabe von Anrufbestätigungssignalen in einer Vermittlungsanlage, in der für die Übertragung von Datensignalen in ankommender und abgehender Übertragungsrichtung vorgesehene Anschlußleitungen an Leitungsanschlußschaltungen angeschlossen sind, die zu Anschlußleitungsgruppen zusammengefaßt mit die Datensignalvermittlung zwischen den Anschlußleitungen steuernden Datenübertragungseinrichtungen verbunden sind, wobei jede Anschlußleitungsgruppe für die Datensignale in abgehender Übertragungsrichtung übertragenden Anschlußleitungen eine Registeranordnung aufweist, aus der ein Anrufbestätigungssignal sofort nach Ermittlung eines Anrufsignals und eines diese Ermittlung anzeigenden Meldesignals abgegeben wird.

Es ist bereits eine Schaltungsanordnung zum Quittieren von über Datensignale in ankommender Übertragungsrichtung zuführenden Anschlußleitungen eintreffenden Anrufsignalen durch Abgabe von Anrufbestätigungssignalen in einer Daten- und Fernschreibvermittlungsanlage bekannt ("Siemens-Zeitschrift", 51 (1977), Heft 1, Seiten 18 bis 27), bei der für die Übertragung von Datensignalen in ankommender und abgehender Übertragungsrichtung vorgesehene Anschlußleitungen an Leitungsanschlußschaltungen angeschlossen sind, die zu Anschlußleitungsgruppen zusammengefaßt mit die Datensignalvermittlung zwischen den Leitungsanschlußleitungen steuernden Datenübertragungsrichtungen verbunden sind. Bei dieser bekannten Schaltungsanordnung erfolgt das Quittieren von Anrufsignalen dadurch, daß Anrufbestatigungssignale von zentral vorgesehenen Datenübertragungseinrichtungen bereitgestellt werden. Es hat sich nun gezeigt, daß diese Maßnahme dann nicht zufriedenstellt, wenn ein relativ starker Verbindungsverkehr zu berücksichtigen ist. Überdies existieren Vorschriften bzw. Empfehlungen (siehe CCIII-Empfehlung X.71), die in Verbindung mit synchron arbeitenden Anschlußschaltungen zu berücksichtigen sind. Dabei existiert im speziellen Fall die Forderung, ein Anrufbestatigungssignal spätestens 10 ms nach Auftreten eines Anrufsignals abzugeben. Eine derartige Forderung ist jedoch bei der bisher bekannten Schaltungsanordnung nicht immer zu erfüllen.

Es ist ferner eine Schaltungsanordnung zum Ansteuern von Datenstationen in Datenübertragungsanlagen bekannt (DE-B2-2 903 646), bei denen während der Anrufung einer von mehreren Stationen unter Mitwirkung von Taktsignalen zunächst mehrere einander identische Synchronisationszeichen und nachfolgend weitere Zeichen bitseriell in ein Schieberegister eingegeben werden, an dessen Stufen parallel ein Speichergerät angeschlossen ist. Der Inhalt des Schieberegisters adressiert das Speichergerät derart, daß dessen Ausgangssignale einen Detektor für die Synchronisationszeichen und über diesen einen von den Taktsignalen weiterschaltbaren Bitzähler einschalten, der einen ihm nachgeschalteten Zeichenzähler betätigt. Dieser Zeichenzähler schaltet nach Zählung einer vorgegebenen Anzahl von Synchronisationszeichen über ein weiteres adressierbares Speichergerät den Detektor für die Synchronisationszeichen ab, und er schaltet nach Zählung einer vorgegebenen Anzahl von weiteren Zeichen ein Flip-Flop zur Ausgabe eines Inbetriebnahmesignals an ein Steuergerät der angerufenen Station ein. Mit diesen Schaltungsmaßnahmen werden zwar nicht nur die einer Nachricht vorauslaufenden synchronisierenden oder adressierenden Signale erkannt, sondern es werden auch nachfolgende, der Nachricht vorauslaufende Standardzeichen zumindest hinsichtlich ihrer Anzahl ermittelt. Von Nachteil bei dieser bekannten Schaltungsanordnung ist jedoch deren relativ hoher schaltungstechnischer Aufwand hinsichtlich der Bereitstellung von Anrufbestätigungssignalen.

Im Zusammenhang mit der Datensignalübertragung ist es auch schon bekannt ("Die Organisation von Datennetzen", James Martin, Karl Hanser Verlag, München 1972, Seite 149), die in eine Verbindung einzubeziehende Datenstation daraufhin abzufragen, ob sie bereit ist, einen Datenblock zu empfangen. Diese Datenstation antwortet dann positiv oder negativ, indem sie ein Steuerzeichen oder eine Steuerzeichenfolge zurückschickt. Über den näheren Aufbau einer Schaltungsanordnung zum Quittieren von Abfragesignalen ist in diesem Zusammenhang jedoch nichts bekannt.

Es ist schließlich auch schon eine Schaltungsanordnung zur Aufnahme und Abgabe von Informationsdaten und Signalisierungsdaten in einer programmgesteuerten Vermittlungszentrale bekannt (DE-A-2 833 048). Bei dieser bekannten Schaltungsanordnung sind zwar Register für die Zwischenspeicherung von Signalen vorgesehen. Über irgendwelche Maßnahmen zum Quittieren von Abfragesignalen ist jedoch auch in diesem Zusammenhang nichts konkret bekannt.

Der Erfindung liegt die Aufgabe zugrunde, eine Schaltungsanordnung der eingangs genannten Art so auszugestalten, daß mit geringem schaltungstechnischen Aufwand die Anrufbestätigungssignale bereitgestellt und abgegeben werden können.

Gelöst wird die vorstehend aufgezeigte Aufgabe durch die im Anspruch 1 gekennzeichneten Maßnahmen.

Die Erfindung bringt den Vorteil eines besonders geringen schaltungstechnischen Aufwands hinsichtlich der Realisierung der Registeranordnung und damit im Hinblick auf die Abgabe der Bestätigungssignale mit sich.

Bei Ausgestaltung der Erfindung in der im Anspruch 2 gekennzeichneten Weise ergibt sich der Vorteil, daß auf relativ einfache Weise Verzögerungen bei der Aufnahme von Datensignalen von diese Datensignale zuführenden Anschlußleitungen bei der Weitergabe dieser Datensignale berücksichtigt werden können.

Anhand von Zeichnungen wird die Erfindung nachstehend beispielsweise näher erläutert.

FIG 1 zeigt in einem Blockschaltbild eine Schaltungsanordnung gemäß der Erfindung.

FIG 2 zeigt ein Signaldiagramm, anhand dessen die Arbeitsweise der in FIG 1 dargestellten Schaltungsanordnung erläutert wird.

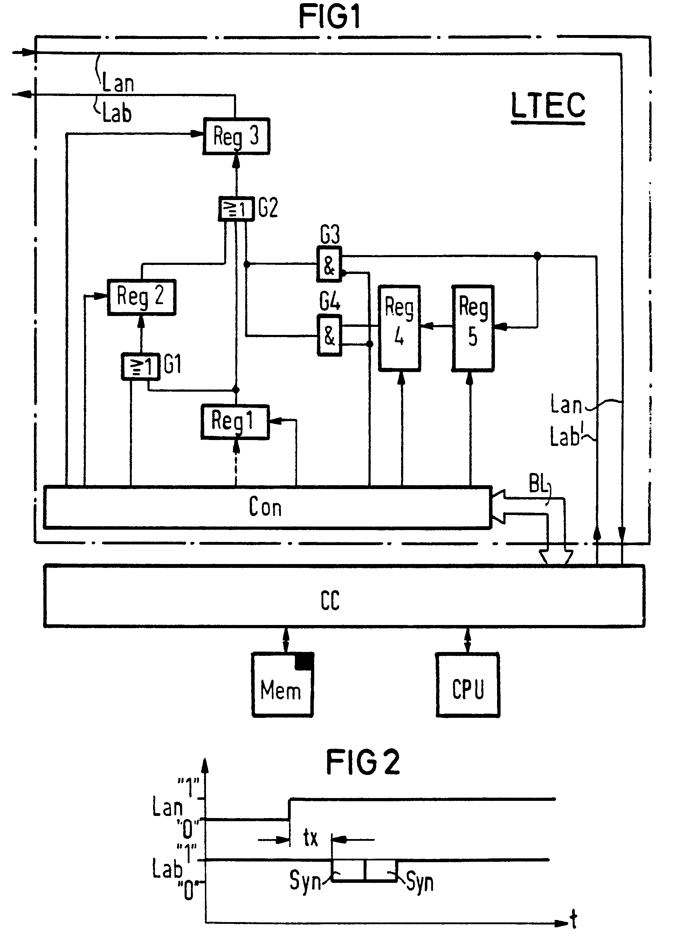

In FIG 1 ist schematisch eine Vermittlungsanlage angedeutet, bei der es sich insbesondere um eine Daten- und Fernschreibvermittlungsanlage handelt, wie sie an der eingangs erwähnten Stelle näher beschrieben ist. Von dieser Vermittlungsanlage sind in FIG 1 zentral vorgesehene Datenübertragungseinrichtungen angedeutet, die eine Datenübertragungssteueranordnung CC, einen Arbeitsspeicher Mem und eine Verarbeitungseinheit bzw. Zentraleinheit CPU umfassen. An diesen Datenübertragungseinrichtungen, und zwar insbesondere an der Datenübertragungssteueranordnung CC sind Anschlußleitungsgruppen angeschlossen, von denen in Fig. 1 lediglich eine einzige Leitungsanschlußgruppe LTEC angedeutet ist. In den betreffenden Leitungsanschlußgruppen sind Anschlußleitungen zusammengefaßt, die Datensignale in ankommender Übertragungsrichtung bzw. in abgehender Übertragungsrichtung übertragen. Bei der in Fig. 1 angedeuteten Anschlußleitungsgruppe LTEC sind zwei derartige Leitungen angedeutet: Eine Datensignale in ankommender Übertragungsrichtung zuführende Anschlußleitung Lan und eine Datensignale in abgehender Übertragungsrichtung abgebende Anschlußleitung Lab.

Zu der Anschlußleitungsgruppe LTEC gehört gemäß eine Steueranordnung Con, die über eine Busleitung BL mit der Datenübertragungssteueranordnung CC verbunden ist. Über diese Busleitung BL tauschen die beiden Steueranordnungen Con und CC insbesondere Befehle bzw. Kommandos aus.

Mit der Steueranordnung Con ist ein Register Reg1 über wenigstens eine Steuerleitung verbunden, über die den Register Reg1 Steuersignale zuführbar sind, auf deren Auftreten hin der in dem betreffenden Register Reg1 enthaltene Registerinhalt abgegeben wird. Gegebenenfalls ist das Register Reg1 mit einem Ladeeingang an der Steueranordnung Con angeschlossen (gestrichelte Linie), um über diese Verbindung gesondert geladen werden zu können. An dieser Stelle sei angemerkt, daß der Registerinhalt des Registers Reg1 durch ein Anrufbestätigungssignal gegeben ist.

Das Register Reg1 ist ausgangsseitig über ein ODER-Glied G1 mit einen Signal- bzw. Ladeeingang eines Registers Reg2 verbunden, welches mit einem Steuereingang ebenfalls an der Steueranordnung Con angeschlossen ist. Das betreffende ODER-Glied G1 ist im übrigen mit einem weiteren Eingang ebenfalls mit der Steueranordnung Con verbunden.

Das Register Reg1 und das Register Reg2 sind ausgangsseitig über ein weiteres ODER-Glied G2 mit dem Signal- bzw. Ladeeingang eines weiteren Registers Reg3 verbunden, welches mit einem Steuereingang an der Steueranordnung Con angeschlossen ist. Dieses Register Reg3 ist ausgangsseitig mit der Signale in abgehender Übertragungsrichtung abführenden Leitung Lab verbunden. Das betreffende Register Reg3 bildet zusammen mit den beiden Registern Reg2 und Reg1 eine Registeranordnung, auf deren Funktionsweise im folgenden unter Bezugnahme auf das in Fig. 2 dargestellte Diagramm eingegangen wird.

In der obersten Zeile des in Fig. 2 dargestellten Diagramms sind Pegelverhältnisse angedeutet, wie sie auf der in Fig. 1 angedeuteten Anschlußleitung Lan auftreten mögen. Dabei ist angenommen, daß ein Pegelwechsel vom binären Zustand ”0” zum binären Zustand ”1” erfolgt. Es sei hier jedoch angemerkt, daß es prinzipiell auch möglich ist, einen anderen Pegelwechsel zu berücksichtigen. Der in Fig. 2 angedeutete Pegelwechsel soll kennzeichnend sein für das Auftreten eines Anrufzustands. Dies bedeutet, daß das mit dem binären Pegel ”1” auf der Anschlußleitung Lan auftretende Signal ein Anrufsignal darstellt.

Das auf der Anschlußleitung Lan gemäß Fig. 1 auftretende Anrufsignal wird unter Zugrundelegung der in Fig. 1 angedeuteten Schaltungsverhältnisse von der dort vorgesehenen Datenübertragungssteuerungsanordnung CC aufgenommen und als Anrufsignal erkannt. Die betreffende Datenübertragungssteuerungsanordnung CC gibt daraufhin ein Meldesignal an die Steueranordnung Con der Anschlußleitungsgruppe LTEC ab, von der das betreffende Anrufsignal aufgenommen worden ist. Es sei hier jedoch angemerkt, daß es grundsätzlich auch möglich ist, eine entsprechende Bewertung des jeweiligen Anrufsignals in der zugehörigen Anschlußleitungsgruppe vorzunehmen.

Auf die Abgabe des zuvor erwähnten Meldesignals an die Steueranordnung Con veranlaßt diese die Abgabe eines Steuersignals an den Steuereingang des Registers Reg1. In diesem Register Reg1 befindet sich, wie oben bereits erwähnt, ein Anrufbestätigungssignal. Dieses Anrufbestätigungssignal wird nunmehr über das ODER-Glied G2 in das Register Reg3 und außerdem in das Register Reg2 geladen. Auf anschließend den Steuereingängen der beiden Register Reg3 und Reg2 zugeführte Steuersignale der Steueranordnung Con hin werden somit zwei Anrufbestätigungssignale über die Anschlußleitung Lab abgegeben. Die Abgabe dieser Anrufbestätigungsignsle erfolgt gemäß Fig. 2 zu einem Zeitpunkt, der um eine Zeitspanne tx gegenüber dem Beginn des Auftretens eines Anrufsignals auf der Anschlußleitung Lan verzögert ist. Diese Zeitspanne tx kann beispielsweise kleiner als 10 ms sein. Die über die Anschlußleitung Lab gemäß Fig. 1 abgegebenen Anrufsignale sind in der untersten Zeile des Diagramms gemäß Fig. 2 mit Syn angedeutet; bei diesen Signalen handelt es sich beispielsweise um Synchronisiersignale. Grundsätzlich kann jedoch auch irgendein anderes Signal als Anrufbestätigungssignal verwendet werden. Dabei zeigt Fig. 2 noch, daß mit der Abgabe des betreffenden Anrufbestätigungssignals Syn ein Pegelwechsel vom binären "1"-Pegel zum binären "0"-Pegel auf der Anschlußleitung Lab erfolgt.

Im Hinblick auf die zuvor betrachtete Registeranordnung sei noch angemerkt, daß das Register Reg2 normalerweise für die Aufnahme eines sogenannten Leerzeichens dient, welches bei entsprechendem Bedarf, z. B. im Ruhezustand der Schaltungsanordnung, über die Anschlußleitung Lab abzugeben ist. In diesem Fall würde ein einmal in das Register Reg2 geladenes Leerzeichen durch anschließend dem Steuereingang dieses Registers Reg2 zugeführte Steuersignale zerstörungsfrei den Register Reg3 zugeführt werden, aus dem dann das jeweilige Leerzeichen an die Anschlußleitung Lab abgegeben würde. Während also normalerweise in dem Register Reg2 das Leerzeichen enthalten ist und enthalten bleibt, bleibt das Anrufbestätigungssignal in dem Register Reg1 enthalten. Lediglich auf die Zuführung geänderter Signale an den Signal- bzw. Steuereingängen dieser Register Reg2, Reg1 können die Inhalte dieser Register geändert werden.

Nunmehr sei noch kurz auf einen in Fig. 1 angedeuteten, bisher aber noch nicht betrachteten Schaltungsteil eingegangen. Dieser Schaltungsteil umfaßt zwei Register Reg4, Reg5, von denen das Register Reg5 mit seinem Signalbzw. Ladeeingang an einer Signale zuführenden Zuführungsleitung Lab' angeschlossen ist die mit der Datenübertragungssteuerungsanordnung CC verbunden ist. Mit der betreffenden Zuführungsleitung Lab' ist ferner ein Signaleingang eines UND-Gliedes G3 verbunden, welches ausgangsseitig mit einem Eingang des bereits erwähnten ODER-Gliedes G2 verbunden ist.

Das Register Reg5 ist ausgangsseitig mit dem Signal- bzw. Ladeeingang eines Registers Reg4 verbunden, welches ausgangsseitig mit einem Eingang eines UND-Gliedes G4 verbunden ist. Dieses UND-Glied G4 ist ebenfalls mit der Eingangsseite des ODER-Gliedes G2 verbunden. Die beiden Register Reg4, Reg5 sind mit Steuereingängen an der Steueranordnung Con angeschlossen. Das UND-Glied G3 ist mit einem negierenden Eingang zusammen mit einem Eingang des UND-Gliedes G4 an einem weiteren Ausgang der Steueranordnung Con angeschlossen.

Der gerade betrachtete Schaltungsteil mit den Registern Reg4, Reg5 und den UND-Gliedern G3 und G4 dient dazu, die über die Zuführungsleitung Lab' zugeführten und über die Anschlußleitung Lab weiterzuleitenden Datensignale gegebenenfalls zwischenzupuffern. In diesem Fall sind die beiden Register Reg4, Reg5 in die betreffende Verbindung einbezogen. Dazu ist das UND-Glied G4 übertragungsfähig gesteuert, während das UND-Glied G3 gesperrt ist. Von dieser Zwischenpufferung wird in dem Fall Gebrauch gemacht, daß die Zuführung von Datensignalen über die Zuführungsleitung Lab' nicht zyklisch erfolgt, während die Abgabe von Datensignalen über die Anschlußleitung Lab zyklisch erfolgen soll. Mit anderen Worten ausgedrückt heißt dies, daß durch den gerade betrachteten Schaltungsteil ein Zeitausgleich zwischen azyklisch aufgenommenen und zyklisch weiterzuleitenden Datensignalen erfolgt. Zu einer solchen azyklischen Aufnahme von Datensignalen kann es beispielsweise dadurch kommen, daß zu aufeinanderfolgenden Datensignal-Aufnahmezeitspannen unterschiedliche Zahlen von Anschlußleitungen bezüglich der Zuführung von Datensignalen zu berücksichtigen sind.

**Patentansprüche**

1. Schaltungsanordnung zum Quittieren von über Datensignale in ankommender Übertragungsrichtung zuführenden Anschlußleitungen eintreffenden Anrufsignalen durch Abgabe von Anrufbestätigungssignalen, in einer Vermittlungsanlage, in der für die Übertragung von Datensignalen in ankommender und abgehender Übertragungsrichtung vorgesehene Anschlußleitungen an Leitungsanschlußschaltungeß angeschlossen sind, die zu Anschlußleitungsgruppen (LTEC) zusammengefaßt mit die Datensignalvermittlung zwischen den Anschlußleitungen steuernden Datenübertragungseinrichtungen (CC, Mem, CPU) verbunden sind, wobei jede Anschlußleitungsgruppe (LTEC) für die Datensignale in abgehender Übertragungsrichtung übertragenden Anschlußleitungen (Lab') eine Registeranordnung (Reg1, Reg2, Reg3) aufweist, aus der ein Anrufbestätigungssignal sofort nach Ermittelung eines Anrufsignals und eines diese Ermittelung anzeigenden Meldesignals abgegeben wird, dadurch gekennzeichnet, daß das Anrufbestätigungssignal in einem ersten Register (Reg1) enthalten ist, aus welchem das betreffende Anrufbestätigungssignal mit Auftreten des Meldesignals in zwei weitere Register (Reg2, Reg3) geladen wird, deren Inhalte anschließend über eine Anschlußleitung (Lab) abgegeben werden, und daß zumindest eines der weiteren Register (Reg2, Reg3) für die Aufnahme und Weiterleitung von Datensignalen über die genannte Anschlußleitung (Lab) dient.

2. Schaltungsanordnung nach Anspruch 1, dadurch gekennzeichnet, daß in eine die Datensignale einem weiteren Register zu führende Zuführungsleitung (Lab') gegebenenfalls wenigstens ein weiteres Pufferregister (Reg4, Reg5) einschaltbar ist.

## Patentansprüche

1. Circuit for the acknowledgement of calling signals arriving via subscriber lines supplying data signals in an incoming transmission direction by emitting confirmation signals, in an exchange in which subscriber lines provided for the transmission of data signals in an incoming and outgoing transmission direction are connected to line termination circuits which, combined to line termination groups (LTEC), are connected to the data transmission facilities (CC, Mem, CPU) controlling the data signal switching between the subscriber lines, each line termination group (LTEC) having for the subscriber lines (Lab') transmitting data signals in an outgoing transmission direction a register arrangement (Reg1, Reg2, Reg3) from which a confirmation signal is emitted immediately after detection of a calling signal and of an indication signal indicating this detection, characterized in that the confirmation signal is contained in a first register (Reg1) from which, upon the appearance of the indication signal, the relevant confirmation signal is loaded into two further registers (Reg2, Reg3), the contents of which are subsequently emitted via a subscriber line (Lab), and in that at least one of the further registers (Reg2, Reg3) serves to receive and forward data signals via said subscriber line (Lab).

2. Circuit according to claim 1, characterized in that if appropriate at least one further buffer register (Reg4, Reg5) can be inserted into a supply line (Lab') supplying the data signals to a further register.

## Revendications

1. Montage pour accuser réception de signaux d'appel arrivant par l'intermédiaire de lignes de raccordement envoyant des signaux de données dans le sens de transmission d'arrivée, au moyen de la délivrance de signaux de confirmation d'appel dans une installation de commutation, dans laquelle des lignes de raccordement prévues pour la transmission de signaux de données dans le sens de transmission d'arrivée et dans le sens de transmission de départ sont raccordées à des circuits de raccordement de lignes, qui sont reliés, en étant rassemblés pour former des groupes (LTEC) de lignes de raccordement, à des dispositifs de transmission de données (CC, Mem, CPU) commandant la transmission des signaux de données entre les lignes de raccordement, chaque groupe (LTEC) de lignes de raccordement comportant, pour les lignes de raccordement (Lab') transmettant des signaux de données dans le sens de transmission de départ, un dispositif à registres (Reg1, Reg2, Reg3), à partir duquel un signal de confirmation d'appel est délivré aussitôt après la détermination d'un signal d'appel et d'un signal de réception indiquant cette détermination, caractérisé par le fait que le signal de confirmation d'appel est contenu dans un premier registre (Reg1), à partir duquel le signal considéré de confirmation d'appel est chargé, lors de l'apparition du signal de signalisation, dans deux autres registres (Reg2, Reg3), dont les contenus sont délivrés ensuite au moyen d'une ligne de raccordement (Lab), et qu'au moins l'un des autres registres (Reg2, Reg3) est utilisé pour recevoir et retransmettre les signaux de données par l'intermédiaire de ladite ligne de raccordement (Lab).

2. Montage suivant la revendication 1, caractérisé par le fait qu'éventuellement au moins un autre registre tampon (Reg4, Reg5) peut être branché dans une ligne d'amenée (Lab') envoyant les signaux de données à un autre registre.

# FIG1

# FIG 2